# EUROPEAN PATENT SPECIFICATION

(11) **EP 2 814 994 B1**
(45) Date of publication and mention of the grant of the patent: **10.02.2016**
(21) Application number: 13704111.7
(22) Date of filing: 13.02.2013
(51) Int. Cl.: C22C 38/44, C22C 38/46, C22C 33/02, F16C 33/62, F16C 33/64, C23C 8/22, C21D 9/40, C21D 6/00, F16C 33/32, F16C 33/34

(54) **A BEARING STEEL COMPOSITION**
LAGERSTAHLZUSAMMENSETZUNG
COMPOSITION D'ACIER À COUSSINETS

(30) Priority: 15.02.2012 WO PCT/EP2012/052585
(43) Date of publication of application: 24.12.2014
(73) Proprietor: Aktiebolaget SKF, 415 50 Göteborg (SE)
(72) Inventor: SHERIF, Mohamed, NL-3511AS Utrecht (NL); BESWICK, John, NL-3417 WX Montfoort (NL)
(74) Representative: Tweedlie, Diane Harkness
(86) International application number: PCT/EP2013/052881
(87) International publication number: WO 2013/120903

(56) References cited:
- EP-A1- 0 739 994
- JP-A- H05 125 497
- US-A- 4 484 959
- US-A- 4 778 522
- US-A1- 2002 124 911
- US-B2- 7 018 107

## Description

### Technical field

The present invention relates to the field of steels and bearings. More specifically, the present invention relates to a novel bearing steel composition, a method of forming a bearing component and a bearing comprising such a component.

### Background

Bearings are devices that permit constrained relative motion between two parts. Rolling element bearings comprise inner and outer raceways and a plurality of rolling elements (balls or rollers) disposed therebetween. For long-term reliability and performance it is important that the various elements have a high resistance to rolling contact fatigue, wear and creep.

Conventional techniques for manufacturing metal components involve hot-rolling or hot-forging to form a bar, rod, tube or ring, followed by a soft forming process to obtain the desired component.

Surface hardening processes are well known and are used to locally increase the hardness of surfaces of finished components so as to improve, for example, wear resistance and fatigue resistance. A number of surface or case hardening processes are known for improving rolling contact fatigue performance.

An alternative (or addition) to case-hardening is through-hardening. Through-hardened components differ from case-hardened components in that the hardness is uniform or substantially uniform throughout the component. Through-hardened components are also generally cheaper to manufacture than case-hardened components because they avoid the complex heat-treatments associated with carburizing, for example. For through-hardened bearing steel components, two heat-treating methods are available: martensite hardening or austempering. Component properties such as toughness, hardness, microstructure, retained austenite content, and dimensional stability are associated with or affected by the particular type of heat treatment employed.

The martensite through-hardening process involves austenitising the steel prior to quenching below the martensite start temperature. The steel may then be low-temperature tempered to stabilize the microstructure.

The bainite through-hardening process involves austenitising the steel prior to quenching above the martensite start temperature. Following quenching, an isothermal bainite transformation is performed. Bainite through-hardening is sometimes preferred in steels instead of martensite through-hardening. This is because a bainitic structure may possess superior mechanical properties, for example toughness and crack propagation resistance.

Numerous conventional heat-treatments are known for achieving martensite through-hardening and bainite through-hardening.

WO 01 /79568 and US 7018107 describe methods for the production of a part for a rolling bearing.

EP 0739994 (A1) relates to a bearing steel and a bearing member having excellent thermal resistance and toughness, and a method of producing the same.

It is an objective of the present invention to address or at least mitigate some of the problems associated with prior art and to provide a bearing steel composition and component formed therefrom that exhibits at least one of high abrasive wear resistance, high local toughness, and resistance to crack growth.

### Summary

In a first aspect, the present invention provides a bearing steel composition consisting of:
(a) from 0.1 to 0.2 wt.% C,
(b) from 3.25 to 4.25 wt.% Cr,
(c) from 9.5 to 11.5 wt.% Mo,
(d) from 5.75 to 6.75 wt.% W,
(e) from 1.5 to 2.5 wt.% V,
(f) from 2.5 to 3.5 wt.% Ni,
(g) optionally one or more of the following elements
   from 0 - 1 wt.% Mn,
   from 0 - 1 wt.% N,
   from 0 - 1 wt.% Si,
   from 0 - 1 wt.% Co,
   from 0 - 1 wt.% Al,
   from 0 - 0.1 wt.% S,
   from 0 - 0.1 wt.% P
   from 0 - 0.1 wt.% O, and
(h) the balance iron, together with unavoidable impurities, wherein the unavoidable impurities, in total, do not exceed 0.5 wt.% of the composition.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The steel composition preferably comprises from 0.12 to 0.18 wt.% C, more preferably from 0.14 to 0.16 wt.% C, still more preferably about 0.15 wt.% C. In combination with the other alloying elements, this results in the desired microstructure and mechanical properties, particularly hardness. Carbon acts to lower the bainite transformation temperature.

The steel composition preferably comprises from 3.4 to 4.1 wt.% Cr, more preferably from 3.7 to 3.8 wt.% Cr, still more preferably about 3.75 wt.% Cr. Chromium acts to increase hardenability and reduce the bainite start temperature. Chromium also provides an improved corrosion resistance property to the steel.

The steel composition preferably comprises from 10 to 11 wt.% Mo, more preferably from 10.2 to about 10.8 wt.% Mo, still more preferably about 10.5 wt.% Mo. Molybdenum acts to avoid austenite grain boundary embrittlement owing to impurities such as, for example, phosphorus. Molybdenum also acts to increase hardenability and reduce the bainite start temperature. Molybdenum imparts toughness for heavy service, and provides especially heat-resistant alloys.

The steel composition preferably comprises from 6 to 6.5 wt.% W, more preferably from 6.2 to 6.3 wt.% W, still more preferably about 6.25 wt.% W. In combination with the other alloying elements and C, this results in the desired microstructure and mechanical properties, particularly hardness.

The steel composition preferably comprises from 1.7 to 2.3 wt% V, more preferably from 1.8 to 2.2 wt% V, still more preferably about 2 wt% V. In combination with the other alloying elements and C, this results in the desired microstructure and mechanical properties, particularly hardness.

The steel composition preferably comprises from 2.7 to 3.3 wt% Ni, more preferably from 2.8 to 3.2 wt% Ni, still more preferably about 3 wt% Ni. In combination with the other alloying elements and C, the presence of Ni in this range has been found to suppress the formation a brittle phase, thought to be an intermetallic Laves phase. Such a brittle phase is undesirable and may give rise to grain-boundary embrittlement problems. Thus, the presence of Ni in the steel composition according to the present invention serves to improve the mechanical properties of the alloy.

The alloy may optionally contain one or more Mn, N, Si, Co and Al. S, P and O may also be present in small amounts.

Preferably the iron forms the balance of the composition, together with unavoidable impurities.

An Example of a steel composition according to the present invention is an alloy comprising about 0.15 wt.% C, about 3.75 wt.% Cr, about 10.50 wt.% Mo, about 6.25 wt.% W, about 2.0 wt.% V and about 3.0 wt.% Ni, and the balance being iron together with unavoidable impurities.

It will be appreciated that the steel for use in the bearing component according to the present invention may contain unavoidable impurities, which in total, do not exceed 0.5 wt.% of the composition. Preferably, the alloys contain unavoidable impurities in an amount of not more than 0.3 wt.% of the composition, more preferably not more than 0.1 wt.% of the composition. With regard to any phosphorous and sulphur and oxygen, the content of these three elements is preferably kept to a minimum.

The alloys according to the present invention may consist essentially of the recited elements.

The microstructure and resulting mechanical properties lead to improved rolling contact fatigue performance in the bearing component.

In a second aspect, the present invention provides a bearing component formed from a steel composition as herein described. The bearing component can be at least one of a rolling element (for example ball or roller element), an inner ring, and an outer ring. The bearing component could also be part of a linear bearing such as ball and roller screws.

At least a wear portion of the bearing component is formed by the method or made of the steel composition as herein described. The wear portion, for example, the raceway of a bearing ring, may be formed separately from the body of the bearing ring and then joined by conventional joining techniques such as diffusion joining or welding.

The bearing component is formed by a powder metallurgical technique. This route is advantageous for high temperature bearing applications.

A surface of the bearing component is case hardened by carburizing and also optionally nitriding. The carbon level at the surface of the component is from 0.5 - 1.1 wt.%.

In a third aspect, the present invention provides a bearing comprising a bearing component as herein described. Such a bearing may be used in many different types of machinery to retain and support rotating components.

According to a fourth aspect, the present invention provides a process for the manufacture of a bearing component, the process comprising:
(i) providing a bearing steel composition as herein described;
(ii) forming a bearing component from the bearing steel composition by a powder metallurgical technique; and
(iii) case hardening the component by performing a carburizing treatment in a gas furnace or vacuum furnace at a temperature of from 900 to 980°C, wherein the carbon level at the surface of the component following the carburizing treatment is from 0.5 to 1.1 wt.%, and wherein the process optionally further comprises a nitriding step.

The carbon level at the surface of the component following the carburizing treatment is from 0.5 to 1.1 wt%, more preferably from 0.7 to 0.9 wt %.

The carburizing treatment in a gas furnace or vacuum furnace is preferably carried out at a temperature of from 925 to 955°C or from 927 to 954°C.

In one embodiment, the carburizing treatment comprises vacuum carburizing using either propane or acetylene as an enriching gas. In another embodiment, the carburizing treatment comprises gas carburizing using propane or natural gas as an enriching gas.

Following the carburizing treatment, the component may be quenched or slow cooled. If the component is quenched, then a stress relief may be carried out, for example at temperature of from 600°C to 700°C for typically from 3 to 5 hours, more preferably at about 650°C for from 2 to 4 hours.

The process will typically further comprise the step of hardening the component, preferably using either a salt bath or a vacuum furnace. The process may also further comprise the step of preheating the component at a temperature of 800°C or higher, preferably 843°C or higher. The preheating step equalizes the temperature and minimize stress during subsequent heating. Preheat times are generally from 5 to 10 minutes.

The process will typically further comprise the step of austenitizing the component. Austenitizing temperatures are typically in the range of from 1050°C - 1120°C, preferably from 1075°C - 1095°C, more preferably from 1076°C - 1093°C. Austenitizing times typically vary from 3 to 10 minutes in salt to 20 to 30 minutes in vacuum. Salt bath operations result in quenching in salt, whereas vacuum processing quench cycles are typically performed in nitrogen. The pressure during gas quenching typically varies from 2 to 6 bar.

The process according to the present invention may further comprise the step of tempering, which may be performed a number of times, to obtain lower amounts of retained austenite and increase the hardness of the component. Tempering is typically performed at a temperature of from 535 to 545°C. In addition, the process may involve a deep freeze step, for example a deep freeze before and after the first temper and performed at temperatures from -75°C and -150°C for from 1 - 2 hrs.

Prior to hardening, the steel according to the present invention will typically comprise austenite as the predominant phase. When the steel composition is subjected to hardening and tempering it will exhibit a tempered martensite structure with some retained austenite as well as carbides/carbonitrides. The phases and structures of steel are well known in the art. If austenite is cooled slowly, then the structure can break down into a mixture of ferrite and cementite (usually in the structural forms pearlite or bainite). Rapid cooling can result in martensite being formed. The rate of cooling determines the relative proportions of these phases and therefore the mechanical properties (e.g. hardness, tensile strength) of the steel. Quenching (to induce martensitic transformation), followed by tempering (to break down some martensite and retained austenite, as well as to precipitate some carbides/carbonitrides), is the most common heat treatment for high-performance steels. Deep cooling treatments after hardening and/or tempering stage(s) may also be applied.

For bearing applications the steel composition of the present invention may have a microstructure comprising martensite, any retained austenite and precipitated carbides and/or carbonitrides.

The method employed in the present invention is a form of powder metallurgy. Powder metallurgy typically relies on a forming and fabrication technique comprising three major processing stages:-

Powdering: the material to be handled is physically powdered and divided into many small individual particles.

Moulding: the powder is injected into a mould or passed through a die to produce a weakly cohesive structure close in dimension to the desired product.

Compression: the moulded article is subjected to compression and optionally high temperature to form the final article.

The method of the present invention forms at least a wear portion of a bearing component from a bearing steel composition as set out above.

The composition used in the method preferably corresponds to the composition of the final article produced. However, while the weight percentage of most of the elements will remain essentially constant, the nitrogen content may decrease slightly, perhaps due to degassing. Also the carburizing step will result in an increased carbon concentration in the surface region of the component.

It is preferred that the powdered steel composition is first formed by conventional techniques, for example, by melting suitable ingredients in a melting crucible. The melted components can then be powdered for use in the method of the present invention. Suitable ingredients include the raw elements or oxides or salts of the ingredients which can be decomposed on heating. The ingredients are preferably melted at a temperature in excess of 1500°C to ensure that the composition is fully molten. If the temperature is lower then precipitation of a solid fraction such as δ-ferrite or the like may occur.

The melt can be produced in an induction furnace and/or tapped into an induction heated ladle where further alloying elements can be added in a protective atmosphere. The melt can be stirred and temperature controlled throughout the process. Prior to the atomisation the melt can be tapped into a tundish where the melt is protected by, for example, a protective slag cover or an inert atmosphere.

Each of the powder metallurgical steps is conventional in the art.

The process of the present invention may also involve a nitriding step. That is, the process may comprise a duplex heat treatment including nitriding.

The process of the present invention may further comprise finishing steps and/or tempering and/or annealing steps. In addition to the deep cooling treatment mentioned above, another possible step can be stress relief annealing of a hardened article. Depending on the type of material and the application, the products may be heat treated, machined and subjected to various types of quality control, such as ultra-sonic inspection, dye penetrant testing and testing of mechanical properties.

The method and composition of the present invention can be used to produce steel products such as bearing components. The bearing component will typically have been formed by a process involving hardening and tempering. As a consequence, the microstructure will generally comprise martensite, together with any retained austenite and perhaps also carbides and/or carbonitrides. In one embodiment, the bearing component may be substantially austenitic with just the surface wear portion subjected to martensitic through-hardening. Alternatively, the whole product may be tempered and hardened by conventional methods to produce a martensitically hardened product.

The carburizing step results in an increased carbon concentration in the surface region of the component and an increase in the surface hardness of the component. An optional nitriding step may also be preformed also for the purpose of increasing the surface hardness of the component.

The high surface hardness improves long rolling contact fatigue strength life at low and high temperatures.

## Claims

1. A bearing steel composition consisting of:
(a) from 0.1 to 0.2 wt.% C,
(b) from 3.25 to 4.25 wt.% Cr,
(c) from 9.5 to 11.5 wt.% Mo,
(d) from 5.75 to 6.75 wt.% W,
(e) from 1.5 to 2.5 wt.% V,
(f) from 2.5 to 3.5 wt.% Ni,
(g) optionally one or more of the following elements
from 0 - 1 wt.% Mn,
from 0 - 1 wt.% N,
from 0 - 1 wt.% Si,
from 0 - 1 wt.% Co,
from 0 - 1 wt.% Al,
from 0 - 0.1 wt.% S,
from 0 - 0.1 wt.% P
from 0 - 0.1 wt.% O, and
(h) the balance iron, together with unavoidable impurities, wherein the unavoidable impurities, in total, do not exceed 0.5 wt.% of the composition.

2. A bearing steel composition as claimed in claim 1 comprising from 0.12 to 0.18 wt.% C, more preferably from 0.14 to 0.16 wt.% C.

3. A bearing steel composition as claimed in claim 1 or claim 2 comprising from 3.4 to 4.1 wt.% Cr, more preferably from 3.7 to 3.8 wt.% Cr.

4. A bearing steel composition as claimed in any one of the preceding claims comprising from 10 to 11 wt.% Mo, more preferably from 10.2 to about 10.8 wt.% Mo.

5. A bearing steel composition as claimed in any one of the preceding claims comprising from 6 to 6.5 wt.% W, more preferably from 6.2 to 6.3 wt.% W.

6. A bearing steel composition as claimed in any one of the preceding claims comprising from 1.7 to 2.3 wt.% V, more preferably from 1.8 to 2.2 wt.% V.

7. A bearing steel composition as claimed in any one of the preceding claims comprising from 2.7 to 3.3 wt.% Ni, more preferably from 2.8 to 3.2 wt.% Ni.

8. A bearing steel composition as claimed in any one of the preceding claims comprising about 0.15 wt.% C, about 3.75 wt.% Cr, about 10.50 wt.% Mo, about 6.25 wt.% W, about 2.0 wt.% V and about 3.0 wt.% Ni, and the balance being iron together with any unavoidable impurities.

9. A bearing component formed from a composition according to any one of claims 1 to 8, wherein a surface of the bearing component has been case hardened by carburizing and optionally nitriding and wherein the carbon level at the surface of the component is from 0.5 - 1.1 wt.%.

10. A bearing component as claimed in claim 9 which is at least one of a rolling element, an inner ring, and an outer ring.

11. A bearing component as claimed in claim 9 or claim 10 which is formed by a powder metallurgical technique.

12. A bearing comprising a bearing component as defined in any one of claims 9 to 11.

13. A process for the manufacture of a bearing component, the process comprising:
(i) providing a bearing steel composition as defined in any one of claims 1 to 8;
(ii) forming a bearing component from the bearing steel composition by a powder metallurgical technique; and
(iii) case hardening the component by performing a carburizing treatment in a gas furnace or vacuum furnace at a temperature of from 900 to 980°C, wherein the carbon level at the surface of the component following the carburizing treatment is from 0.5 to 1.1 wt.%, and wherein the process optionally further comprises a nitriding step.

14. A process as claimed in claim 13, wherein the carburizing treatment comprises vacuum carburizing using either propane or acetylene as an enriching gas.

15. A process as claimed in claim 13, wherein the carburizing treatment comprises gas carburizing using propane or natural gas as an enriching gas.

## Patentansprüche

1. Lagerstahlzusammensetzung, die aus Folgendem besteht:
(a) von 0,1 bis 0,2 Gew.-% C,
(b) von 3,25 bis 4,25 Gew.-% Cr,
(c) von 9,5 bis 11,5 Gew.-% Mo,
(d) von 5,75 bis 6,75 Gew.-% W,
(e) von 1,5 bis 2,5 Gew.-% V,
(f) von 2,5 bis 3,5 Gew.-% Ni,
(g) optional einem oder mehreren der folgenden Elemente
von 0 - 1 Gew.-% Mn,
von 0 - 1 Gew.-% N,
von 0 - 1 Gew.-% Si,
von 0 - 1 Gew.-% Co,
von 0 - 1 Gew.-% Al,
von 0 - 0,1 Gew.-% S,
von 0 - 0,1 Gew.-% P
von 0 - 0,1 Gew.-% O, und
(h) den Rest Eisen, zusammen mit unvermeidbaren Verunreinigungen, wobei die unvermeidbaren Verunreinigungen insgesamt 0,5 Gew.-% der Zusammensetzung nicht überschreiten.

2. Lagerstahlzusammensetzung nach Anspruch 1, die von 0,12 bis 0,18 Gew.-% C, besonders bevorzugt von 0,14 bis 0,16 Gew.-% C aufweist.

3. Lagerstahlzusammensetzung nach Anspruch 1 oder 2, die von 3,4 bis 4,1 Gew.-% Cr, besonders bevorzugt von 3,7 bis 3,8 Gew.-% Cr aufweist.

4. Lagerstahlzusammensetzung nach einem der vorhergehenden Ansprüche, die von 10 bis 11 Gew.-% Mo, besonders bevorzugt von 10,2 bis etwa 10,8 Gew.-% Mo aufweist.

5. Lagerstahlzusammensetzung nach einem der vorhergehenden Ansprüche, die von 6 bis 6,5 Gew.-% W, besonders bevorzugt von 6,2 bis 6,3 Gew.-% W aufweist.

6. Lagerstahlzusammensetzung nach einem der vorhergehenden Ansprüche, die von 1,7 bis 2,3 Gew.-% V, besonders bevorzugt von 1,8 bis 2,2 Ges.-% V aufweist.

7. Lagerstahlzusammensetzung nach einem der vorhergehenden Ansprüche, die von 2,7 bis 3,3 Gew.-% Ni, besonders bevorzugt von 2,8 bis 3,2 Gew.-% Ni aufweist.

8. Lagerstahlzusammensetzung nach einem der vorhergehenden Ansprüche, die etwa 0,15 Gew.-% C, etwa 3,75 Gew.-% Cr, etwa 10,50 Gew.-% Mo, etwa 6,25 Gew.-% W, etwa 2,0 Gew.-% V und etwa 3,0 Gew.-% Ni aufweist, und wobei der Rest Eisen zusammen mit unvermeidbaren Verunreinigungen ist.

9. Lagerkomponente, die aus einer Zusammensetzung nach einem der Ansprüche 1 bis 8 ausgebildet ist, wobei eine Oberfläche der Lagerkomponente durch Aufkohlen und optionales Nitrieren einsatzgehärtet worden ist, und wobei der Kohlenstoffgehalt an der Oberfläche der Komponente von 0,5-1,1 Gew.-% beträgt.

10. Lagerkomponente nach Anspruch 9, die ein Wälzkörper und/oder ein Innenring und/oder ein Außenring ist.

11. Lagerkomponente nach Anspruch 9 oder 10, die durch eine pulvermetallurgische Technik gebildet wird.

12. Lager, das eine Lagerkomponente nach einem der Ansprüche 9 bis 11 aufweist.

13. Verfahren zum Herstellen einer Lagerkomponente, wobei das Verfahren die folgenden Schritte aufweist:
(i) Bereitstellen einer Lagerstahlzusammensetzung nach einem der Ansprüche 1 bis 8;
(ii) Bilden einer Lagerkomponente aus der Lagerstahlzusammensetzung durch eine pulvermetallurgische Technik; und
(iii) Einsatzhärten der Komponente durch Durchführen einer Aufkohlungsbehandlung in einem Gasofen oder einem Vakuumofen bei einer Temperatur von 900 bis 980°C, wobei der Kohlenstoffgehalt an der Oberfläche der Komponente anschließend an die Aufkohlungsbehandlung von 0,5 bis 1,1 Gew.-% beträgt, und wobei das Verfahren ferner optional einen Nitrierungsschritt aufweist.

14. Verfahren nach Anspruch 13, wobei die Aufkohlungsbehandlung Vakuumaufkohlen entweder unter Verwendung von Propan oder Acetylen als Anreicherungsgas aufweist.

15. Verfahren nach Anspruch 13, wobei die Aufkohlungsbehandlung Gasaufkohlen entweder unter Verwendung von Propan oder Erdgas als Anreicherungsgas aufweist.

## Revendications

1. Composition d'acier pour roulements composée de :
(a) de 0,1 à 0,2 % en poids de C,
(b) de 3,25 à 4,25 % en poids de Cr,
(c) de 9,5 à 11,5 % en poids de Mo,
(d) de 5,75 à 6,75 % en poids de W,
(e) de 1,5 à 2,5 % en poids de V,
(f) de 2,5 à 3,5 % en poids de Ni,
(g) éventuellement un ou plusieurs des éléments suivants
de 0 à 1 % en poids de Mn,
de 0 à 1 % en poids de N,
de 0 à 1 % en poids de Si,
de 0 à 1 % en poids de Co,
de 0 à 1 % en poids d'Al,
de 0 à 0,1 % en poids de S,
de 0 à 0,1 % en poids de P,
de 0 à 0,1 % en poids de O, et
(h) pour le reste du fer, conjointement avec les inévitables impuretés, les inévitables impuretés ne dépassant pas au total 0,5 % en poids de la composition.

2. Composition d'acier pour roulements selon la revendication 1 comprenant de 0,12 à 0,18 % en poids de C, mieux de 0,14 à 0,16 % en poids de C.

3. Composition d'acier pour roulements selon la revendication 1 ou la revendication 2 comprenant de 3,4 à 4,1 % en poids de Cr, mieux de 3,7 à 3,8 % en poids de Cr.

4. Composition d'acier pour roulements selon l'une quelconque des revendications précédentes comprenant de 10 à 11 % en poids de Mo, mieux de 10,2 à environ 10,8 % en poids de Mo.

5. Composition d'acier pour roulements selon l'une quelconque des revendications précédentes comprenant de 6 à 6,5 % en poids de W, mieux de 6,2 à 6,3 % en poids de W.

6. Composition d'acier pour roulements selon l'une quelconque des revendications précédentes comprenant de 1,7 à 2,3 % en poids de V, mieux de 1,8 à % en poids de V.

7. Composition d'acier pour roulements selon l'une quelconque des revendications précédentes comprenant de 2,7 à 3,3 % en poids de Ni, mieux de 2,8 à 3,2 % en poids de Ni.

8. Composition d'acier pour roulements selon l'une quelconque des revendications précédentes comprenant environ 0,15 % en poids de C, environ 3,75 % en poids de Cr, environ 10,50 % en poids de Mo, environ 6,25 % en poids de W, environ 2,0 % en poids de V et environ 3,0 % en poids de Ni, et le reste étant du fer conjointement avec toutes les inévitables impuretés.

9. Composant de roulement formé à partir d'une composition selon l'une quelconque des revendications 1 à 8, une surface du composant de roulement ayant été cémentée par carburation et éventuellement nitruration et le niveau de carbone à la surface du composant étant de 0,5-1,1 % en poids.

10. Composant de roulement selon la revendication 9 qui est un élément roulant, et/ou une bague intérieure, et/ou une bague extérieure.

11. Composant de roulement selon la revendication 9 ou la revendication 10 qui est formé par une technique de métallurgie des poudres.

12. Roulement comprenant un composant de roulement tel que défini dans l'une quelconque des revendications 9 à 11.

13. Procédé de fabrication d'un composant de roulement, le procédé comprenant :
(i) l'obtention d'une composition d'acier pour roulements telle que définie dans l'une quelconque des revendications 1 à 8 ;
(ii) la formation d'un composant de roulement à partir de la composition d'acier pour roulements par une technique de métallurgie des poudres ; et
(iii) la cémentation du composant en effectuant un traitement de carburation dans un four à gaz ou un four à vide à une température de 900 à 980 °C, le niveau de carbone à la surface du composant après le traitement de carburation étant de 0,5 à 1,1 % en poids, et le procédé comprenant aussi éventuellement une étape de nitruration.

14. Procédé selon la revendication 13, dans lequel le traitement de carburation comprend une carburation sous vide utilisant du propane ou de l'acétylène comme gaz d'enrichissement.

15. Procédé selon la revendication 13, dans lequel le traitement de carburation comprend une carburation au gaz utilisant du propane ou du gaz naturel comme gaz d'enrichissement.
